# EUROPEAN PATENT SPECIFICATION

(11) **EP 0 733 881 B1**
(45) Date of publication and mention of the grant of the patent: **14.10.1998**
(21) Application number: 96108245.0
(22) Date of filing: 22.06.1993
(51) Int. Cl.: G01D 5/14

(54) **Contactless angular position sensor**
Kontakloser Winkelpositionsgeber
Capteur de position angulaire sans contact

(30) Priority: 22.06.1992 US 902075; 28.04.1993 US 51412
(43) Date of publication of application: 25.09.1996
(62) Divisional of application: 93110001.0
(73) Proprietor: DURAKOOL INCORPORATED, Elkhart, Indiana 46515 (US)
(72) Inventor: Wolf, Ronald J., Goshen, Indiana 46526 (US)
(74) Representative: Bauer, Robert, Dipl.-Ing.

(56) References cited:
- EP-A- 0 175 831
- WO-A-88/07172
- DE-A- 3 144 283
- DE-A- 4 014 885
- DE-A- 4 215 641
- FR-A- 2 670 286
- US-A- 3 184 620
- US-A- 3 663 843
- US-A- 4 392 375
- US-A- 5 003 363

## Description

The present invention relates to an angular position sensor in accordance with the pre-characterizing clause of claim 1.

Angular position sensors may be used for various purposes including sensing the angular position of a pivotally mounted device, such as a throttle valve of an internal combustion engine.

Various sensors for monitoring the angular position of a pivotally mounted device, such as a butterfly valve, are known. For example, various contact type sensors, such as electromechanical potentiometers, are known. Such electromechanical potentiometers, include an arcuately-shaped thick film resistive ink resistor and a movably mounted precious metal electrical wiper that is adapted to be mechanically coupled to a butterfly valve such that the relative position of the wiper relative to the resistor varies in accordance with the angular position of the butterfly valve. There are various known problems with such sensors. For example, such sensors cannot be hermetically sealed due to the dynamic seal required between the butterfly valve shaft and the wiper inside the sensor housing. As is known in the art, such dynamic seals are subject to wear over time and thus can result in degraded sensor performance in time. As such, when such sensors are used in a relatively hostile environment, such as an under-hood environment, dirt, moisture and chemical fumes are known to ingress into the sensor housing and cause degradation and erratic operation of the sensor.

Another problem with contact type sensors is that they are subject to wear. In particular, the wipers are known to move back and forth in contact across the thick film resistor a relatively large number of times over the expected lifetime of the sensor; perhaps millions of times. Such moving contact causes localized reductions of the thickness of the thick film resistor. Since resistance is a function of cross-sectional area, the reduction of the resistor thickness will change the local resistance value in the portion of the resistor which experiences the greatest amount of wear. As such, this causes drift of the output over time which affects the calibration and linearity of the sensor. There are other problems with such contact sensors. For example, in some situations, for instance when the engine is run at a nearly constant speed, engine induced vibration can cause additional localized resistor wear, which, as discussed above, can affect the calibration and linear output of the sensor.

In an attempt to overcome the problems accociated with such contact type angular position sensors, non-contact sensors have been developed. Moreover, due to the relatively hostile environment of an internal combustion engine, various magnetic sensors have been developed. For example, US-A-3,818,292, US-A-3,112,464 and US-A-4,570,118 disclose angular position sensors having a permanent magnet and relying on a varying air grap to vary the magnetic flux density applied to a Hall effect device in response to angular motion. However, the varying air gap of such sensors causes the output signal of the sensor to be exponential and thus relatively nonlinear. In order to linearize the response, the magnets utilized with such sensors are known to be formed by various known foundry casting methods in a way to have irregular shapes. However, such cast magnets are known to be rough, having imperfections in their surfaces which contribute to part-to-part variation. The process for removing such imperfections is relatively time-consuming and thus adds significantly to the overall cost of the sensor.

Other known single magnet angular position sensors with a varying air gap utilize irregular-shaped magnet holders for skewing the position of the magnet relative to the rotational axis and the Hall effect element. Such irregular-shaped magnet holders again add to the overall cost of the sensor and also make the sensor relatively difficult to calibrate.

Angular position sensors which utilize a single magnet and a non-varying air gap are also known. For example the angular position sensor disclosed in US-A-4,893,502 includes a circular magnet which is rigidly coupled through a dynamic seal to a butterfly valve shaft and magnetized diametrically to provide opposite north and south poles. A stationary sensing element in the form of a magnetic resistance element (MRE) is disposed centrally in front of the magnet. The sensing element and the magnet are sealed within a common cover which is part of the valve body. Though this angular position sensor thus is integral with the valve, it requires some amount of space particularly in axial direction, which might, however, be very rare in any such applications.

US-A-3,184,620 shows an angular position sensor comprising the features of the pre-characterizing clause of claim 1. This device, in the form of a sine-cosine source, includes two Hall effect elements disposed at right angles one after the other along the pivot or longitudinal central axis of the magnet. The magnet having a corresponding length, the device, again, is relatively bulky along the pivot axis. Moreover, the aperture of the magnet, in cross-section, is of some sort of dog-bone shape and this is difficult to machine

From US-A-3,663,843, on the other hand, an angular position sensor is known which includes a single Hall effect element centrally disposed within a diagonal, slot-shaped aperture of a bifurcated permanent magnet. The magnet thus being closed at one of its ends provides a non-uniform magnetic field as seen along the axial length of the magnet. To increase the range of linearity of the output of this device beyond angles of approximately ± 6°, the Hall effect element is fixedly sandwiched between two ferrite pieces acting as flux concentrators. Because of the non-uniform magnetic field along the axial length of the magnet, the flux concentrators have substantially different configurations and thus do not allow for averaging the magnetic field to improve performance. Assuming this device, nevertheless, operates satisfactorily in providing an approximately linear output signal for an extended angular range, it still suffers from the fact that, again, no standard magnet can be employed.

Finally, DE-A-42 15 641 discloses a double-deck annular magnet having a circular central aperture and surrounding an arrangement including three Hall effect elements arranged around a centrally disposed IC and two flux conducting pieces at both axial faces of the Hall effect elements. Beside a substantial diameter, also this device requires a considerable axial extent.

All this in mind, the invention as claimed aims at providing a sensor of the kind specified in the pre-characterizing portion of claim 1 which, though generating a complete angular position signal substantially linear over a considerable angular range, is simple in construction and small particularly in the axial direction.

The invention as claimed permits to employ a standard magnet of simple design. Moreover, making use also of the feature of claim 5, standard magnets can be employed which have a relatively wide range of tolerance regarding their magnetic field.

Where claim 1, in its characterizing portion, defines the length of the magnet in respect to the sensing element, it ought to be clear that this refers to the length of the actual sensing element not including any embedding thereof other than a normal IC housing.

In the following a corresponding embodiment of the invention will be described by way of example, taking reference to the attached drawings. Therein
FIG. 1 is a perspective view of essential elements of a contactless angular position sensor according to the invention and
Fig. 2 is a cross-sectional view of an angular position sensor as shown in Fig. 1, yet completed by additional elements.

The angular position sensor 200 shown includes a magnet 202, a signal generating means in the form of a magnetic sensing element 204, e.g. a Hall effect device, one or more flux concentrators 206 rigidly secured relative to the sensing element 204, and a movably mounted flux concentrator 208 which enables the sensitivity of the sensor 200 to be adjusted mechanically. The magnet 202 is carried by a drive arm assembly 210 rotatably mounted relative to the sensing element 204 and the flux concentrators 206 and 208. As shown by the direction of arrows 212, the magnet 202 is adapted to rotate about an axis 214.

The magnet 202 is formed as a generally circular element with a central aperture 216. It is configured such that it comprises two semicircular portions each forming a pole. In particular, a semicircular portion 218 forms a south pole, while a semicircular portion 220 forms a north pole.

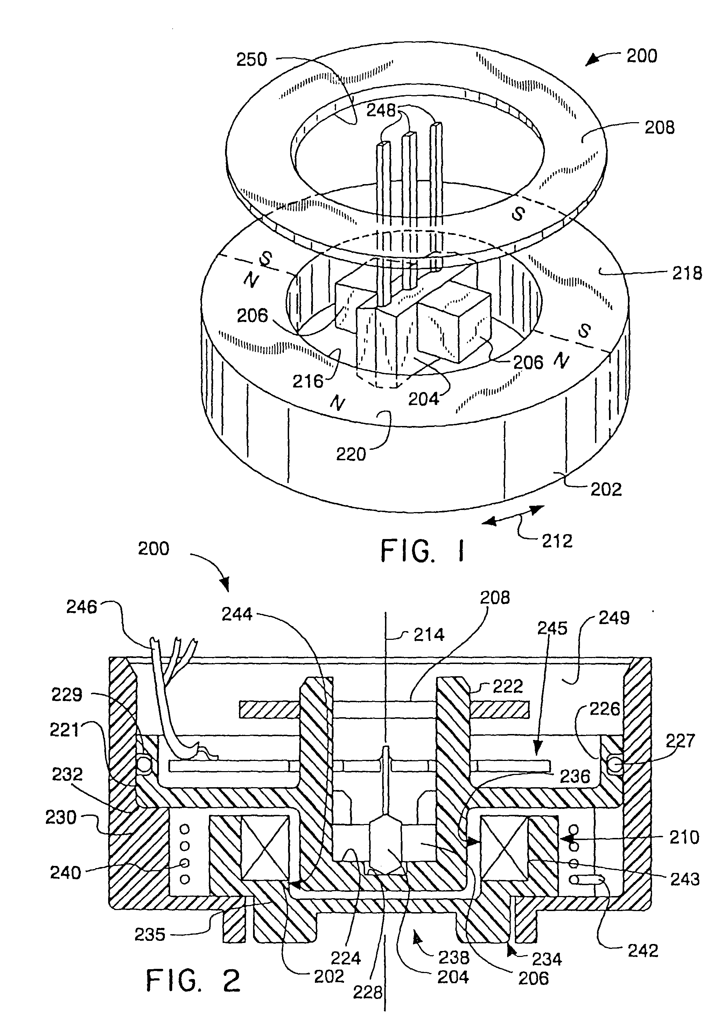

The sensing element 204 and the rigidly mounted flux concentrators 206 are carried by a housing 221 formed from a non-magnetically conductive material, for example, plastic, brass or aluminium. In particular, the housing 221, as best shown in Fig. 2, is formed with a generally cylindrical portion 222 closed on one end 224 and with an annular skirt portion 226. As shown, the sensing element 204 is sandwiched between the rigidly mounted flux concentrators 206 and carried by the closed end 224 of the cylindrical portion 222 of the housing 221. A notch 228 is formed in the closed end 224 for capturing the magnetic sensing element 204 to facilitate proper orientation thereof relative to the housing 221.

The outer diameter of the cylindrical portion 222 of the housing 221 is smaller than the diameter of the centrally disposed aperture 216 in the circular magnet 202 and the cylindrical portion 222 of the housing 221 is disposed within the aperture 216, this reducing the overall axial length of the sensor.

A cover 230 is provided and adapted to be rigidly secured to a stationary external part. The cover 230 is formed as a generally cylindrical member with at least a partial interior annular shoulder 232 and a mouth portion 234. The annular shoulder 232 defines a first interior diameter and a second interior diameter. The first interior diameter is selected to be slightly larger than the outer diameter of the skirt portion 226 of the housing 221. An O-ring 227 disposed in an annular notch 229 formed in the housing 221 is used to seal the housing 221 relative to the cover 230 in order to prevent potting material (see below) from getting into the area of the drive arm assembly 210.

The second interior diameter of the cover 230 is smaller than the first interior diameter. It is selected to enable the drive arm assembly 210 to rotate freely within the cover.

The drive arm assembly 210 includes a drive arm 235 formed as an annular member with an irregular shape defining an annular well portion 236 and a drive portion 238. The annular well portion 236 is formed to receive the cylindrical portion 222 of the housing 221 to enable the overall axial length of the sensor 200 to be reduced in a manner as discussed above. The drive portion 238 is adapted to be coupled to the pivotal member whose rotation is to be sensed in a manner such that the drive arm assembly 210 rotates jointly with this member.

A helical spring 240 is used to bias the drive arm assembly 210 to a predetermined position, for example, the position shown in Fig. 2. The helical spring 240 is disposed about the outer diameter of the drive arm 235. One end (not shown) of the helical spring 240 is rigidly secured to the drive arm 235. The other end 242 of spring 240 is rigidly secured to the cover 230. As such, rotation of the drive arm assembly 210 relative to the cover 230 can cause compression or tension of the spring 240 to bias the drive arm assembly 210.

The well portion 236 of drive arm 235 is formed with an interior annular shoulder 243. The dimensions of the annular shoulder 243 are selected to enable the circular magnet 202 to be flush with an interior annular wall 244 of the drive arm 235.

The sensor 200 also includes a printed circuit board (PCB) 245. The PCB 245 is carried by the cylindrical portion 222 of the housing 221 for providing an electrical path between the magnetic sensing element 204 and a set of external electrical leads 246. In particular, if a Hall effect device is used for the magnetic sensing element 204, such a device will have a plurality of electrical leads 248. The PCB 245 is formed to provide an electrial path between the electrical leads 246 and 248 in a manner as discussed above.

Once the axial distance of the flux concentrator 208 is set, a portion of the housing 221 is potted with a suitable potting material 249, such as epoxy, to seal the assembly from dust, moisture and other harmful contaminants. The annular skirt portion 226 of the housing 221 protects the bottom portion (Fig. 2) from the potting material 249 in order to allow the drive arm assembly 210 to rotate freely.

In operation, rotation of the pivotal member whose rotation is to be sensed causes rotation of the drive arm assembly 210. Since the magnet 202 is rigidly secured to the drive arm assembly 210, such rotation will cause the relative angular position of the north and south magnetic poles of magnet 202 to vary relative to the sensing plane of the sensing element 204. Such change will cause the output signal from the sensing element 204 to vary as a function of the change in relative angular position of the magnet 202 and the drive arm assembly 210.

## Claims

1. A contactless angular position sensor (200) for sensing the angular position of a pivotally mounted device about a predetermined pivot axis (214), said angular position sensor including:
- a cover (230),
- an annular magnet (202) coaxially arranged relative to said pivot axis (214) and having a central aperture (216) and opposed north and south magnetic poles disposed in a common level as seen along said pivot axis,
- coupling means (210) for mechanically coupling said magnet (202) to said pivotally mounted device, and
- a stationary magnetic sensing element (204) generally centrally disposed at least substantially in said aperture (216) of said magnet (202),
**characterized** in
- that said central aperture (216) of said magnet (202) is of generally circular cross section,
- that the axial length of said magnet (202) substantially corresponds to that one of said magnetic sensing element (204), and
- that said sensing element (204) is sandwiched between a pair of flux concentrators (206) within said central aperture (216) of said magnet (202).

2. The angular position sensor (200) as recited in claim 1, wherein said magnet (202) is magnetized to have mutually opposite magnetic polarities at least along its inner circumference.

3. The angular position sensor (200) as recited in claim 1 or 2 wherein said north and south magnetic poles define semi-circular arcuate portions (218, 220) of said magnet (202).

4. The angular position sensor (202) as recited in any one of the preceding claims, wherein said magnetic sensing element (204) comprises a Hall effect device.

5. The angular position sensor (200) as recited in any one of the preceding claims, further including a generally circular flux concentrator (208) disposed generally coaxially relative to said annular magnet (202) and adjustably mounted relative to said sensing element (204).

## Patentansprüche

1. Kontaktloser Winkelpositionsgeber (200) zum Ermitteln der Winkelposition eines drehbar gelagerten Gegenstandes in bezug auf eine vorbestimmte Drehachse (214), mit
- einer Abdeckung (230)
- einem koaxial in bezug auf die Drehachse (214) angeordneten ringförmigen Magneten (202) mit einer zentralen Öffnung (216) und gegenüberliegenden magnetischen Nord- und Südpolen innerhalb einer gemeinsamen Ebene, betrachtet entlang der Drehachse,
- Kupplungsmitteln (210) zum mechanischen Kuppeln des Magneten (202) an den drehbar gelagerten Gegenstand und
- einem im wesentlichen zentral und im wesentlichen innerhalb der Öffnung (216) des Magneten (202) angeordneten ortsfesten magnetischen Sensorelement (204),
dadurch ***gekennzeichnet,***
- daß die zentrale Öffnung (216) des Magneten (202) einen im wesentlichen kreisrunden Querschnitt besitzt,
- daß die axiale Länge des Magneten (202) im wesentlichen derjenigen des magnetischen Sensorelements (204) entspricht und
- daß das Sensorelement (204) zwischen einem Paar Flußkonzentratoren (206) innerhalb der zentralen Öffnung (216) des Magneten (202) eingeschlossen ist.

2. Winkelpositionsgeber (202) nach Anspruch 1, worin der Magnet (202) entsprechend magnetisiert ist, um zumindest entlang seinem Innenumfang miteinander abwechselnde magnetische Polaritäten zu besitzen.

3. Winkelpositionsgeber (200) nach Anspruch 1 oder 2, worin die magnetischen Nord- und Südpole halbkreisförmige gekrümmte Abschnitte (218, 220) des Magneten (202) definieren.

4. Winkelpositionsgeber (200) nach einem der vorhergehenden Ansprüche, worin das magnetische Sensorelement (204) ein Halleffekt-Element aufweist.

5. Winkelpositionsgeber (200) nach einem der vorhergehenden Ansprüche, des weiteren mit einem im wesentlichen kreisrunden Flußkonzentrator (208) in im wesentlichen koaxialer Anordnung in bezug auf den ringförmigen Magneten (202) und in bezug auf das Sensorelement (204) einstellbar angebracht.

## Revendications

1. Détecteur (200) de position angulaire sans contact servant à détecter la position angulaire d'un dispositif pivotant autour d'un axe formant pivot prédéterminé (214), ledit détecteur de position angulaire comprenant:
- un couvercle (230),
- un aimant annulaire (202) disposé de manière coaxiale par rapport audit axe formant pivot (214) et ayant une ouverture centrale (216) et des pôles magnétiques nord et sud opposés disposés au même niveau, vus suivant ledit axe formant pivot,
- un moyen d'accouplement (210) pour accoupler mécaniquement ledit aimant (202) avec ledit dispositif pivotant, et
- un élément magnétique fixe de détection (204) disposé de manière globalement centrale au moins sensiblement dans ladite ouverture (216) dudit aimant (202),
caractérisé en ce que
- ladite ouverture centrale (216) dudit aimant (202) a une section transversale globalement circulaire,
- la longueur axiale dudit aimant (202) correspond sensiblement à celle dudit élément de détection magnétique (204), et
- ledit élément de détection (204) est intercalé entre deux concentrateurs (206) de flux dans ladite ouverture centrale (216) dudit aimant (202).

2. Détecteur (200) de position angulaire selon la revendication 1, dans lequel ledit aimant (202) est aimanté pour avoir des polarités magnétiques mutuellement opposées au moins sur son pourtour intérieur.

3. Détecteur (200) de position angulaire selon la revendication 1 ou 2, dans lequel lesdits pôles magnétiques nord et sud définissent des parties arquées (218, 220) en demi-cercle dudit aimant (202).

4. Détecteur (200) de position angulaire selon l'une quelconque des revendications précédentes, dans lequel ledit élément de détection magnétique (204) comporte un dispositif à effet Hall.

5. Détecteur (200) de position angulaire selon l'une quelconque des revendications précédentes, comprenant en outre un concentrateur (208) de flux globalement circulaire disposé d'une manière globalement coaxiale par rapport audit aimant annulaire (202) et monté de manière réglable par rapport audit élément de détection (204).
